Europäisches Patentamt

**European Patent Office**

Office européen des brevets

(19)

(11) Numéro de publication: **0 001 363**
**B1**

(12) **FASCICULE DE BREVET EUROPEEN**

(45) Date de publication du fascicule de brevet:
**07.01.81**

(51) Int. Cl.³: **B 67 D 5/06** // F16L17/00

(21) Numéro de dépôt: **78400096.0**

(22) Date de dépôt: **12.09.78**

(54) **Dispositif d'obturation de l'extrémité d'une conduite de remplissage de citerne.**

(30) Priorité: **20.09.77 FR 7728262**

(43) Date de publication de la demande:
**04.04.79 Bulletin 79/7**

(45) Mention de la délivrance du brevet:
**07.01.81 Bulletin 81/1**

(84) Etats contractants désignés:
**CH DE NL**

(56) Documents cités:
**FR-A-727 308**
**FR-A-1 601 135**

(73) Titulaire: **COMPAGNIE D'ETUDES ET DE REALISATION DE CYBERNETIQUE INDUSTRIELLE, 56 rue Roger Salengro, F-94120 Fontenay-sous-Bois (FR)**

(72) Inventeur: **Heitz, Pierre, A55 - 1 rue Charles Lorilleux, F-92800 Puteaux (FR)**

(74) Mandataire: **Le Brusque, Maurice et al, CREUSOT-LOIRE 15 rue Pasquier, F-75008 Paris (FR)**

ACTORUM AG.

«Dispositif d'obturation de l'extrémité d'une conduite de remplissage de citerne»

L'invention a pour objet un dispositif d'obturation de l'extrémité d'une conduite et trouve une application particulière dans les installations de remplissage de citernes en produit liquide.

Dans une telle installation, décrite par exemple dans le brevet français 1.370.868, les citernes viennent se placer au-dessous d'une charpente de support sur laquelle est montée la conduite de remplissage reliée à des moyens d'alimentation en fluide.

De telles conduites comprennent généralement au moins un élément tubulaire mobile verticalement le long de son axe de façon à pénétrer à l'intérieur de la citerne, cet élément tubulaire étant relié par un organe de suspension quelconque à un moyen de commande de son déplacement vertical dans le sens de la descente à l'intérieur de la citerne ou de sa remontée.

Dans de nombreux cas, l'extrémité de la conduite est fermée par une plaque d'obturation qui a une forme conique de façon à assurer une diffusion en cône du liquide, celui-ci sortant par des ouvertures latérales ménagées au-dessus de la plaque d'obturation.

Pour que le remplissage se fasse dans de bonnes conditions, notamment sans formation de mousse, il est préférable que le tube soit immergé dans le liquide. C'est pourquoi, lorsque le tube est remonté, il laisse écouler des quantités résiduelles de produit qui peuvent être projetées par le vent sur le dessus des citernes ou les parois de la cabine de contrôle de l'installation de chargement.

On a donc proposé jusqu'à présent un certain nombre de dispositifs pour récupérer les produits s'écoulant le long de la conduite et qui consistent souvent en une sorte de casque escamotable venant se placer sous la conduite lorsque celle-ci sort de la citerne. Ces dispositifs donnent généralement satisfaction mais ont l'inconvénient de ne venir se placer sous la conduite que lorsque celle-ci est remontée au-dessus de l'orifice de la citerne d'une certaine distance qui, selon les dimensions de la citerne, peut être de l'ordre de 1 à 2 mètres. Lorsqu'il y a du vent, les gouttes de produit peuvent par conséquent, pendant ce parcours sans protection, tomber sur la citerne ou sur les passerelles d'accès.

Il semble donc préférable de fermer directement l'extrémité de la conduite de façon à récupérer les gouttes qui s'écoulent dès que la conduite sort de l'orifice de la citerne.

Dans ce but, on a déjà utilisé une gaine cylindrique qui est montée coulissante sur la conduite de façon à s'appuyer, en position basse sur la plaque d'obturation en fermant les ouvertures latérales de l'extrémité de la conduite, ladite gaine étant arrêtée par des butées d'appui sur la citerne lorsque la conduite pénètre à l'intérieur de celle-ci de façon à dégager les ouvertures latérales. De plus, la gaine coulissante est souvent montée sur une plaque qui vient obturer, à la descente de la conduite, l'orifice de la citerne de façon à empêcher les gaz de sortir librement, ceux-ci étant généralement aspirés au fur et à mesure du remplissage.

Pour que la récupération des égouttures soit efficace, il est nécessaire qu'un joint d'étanchéité soit placé entre la conduite et la gaine coulissante. Lorsque la gaine s'appuie, en position basse et à la remontée de la conduite sur la plaque d'obturation, le joint d'étanchéité peut être naturellement placé entre la plaque d'obturation et la partie de la gaine qui s'appuie sur elle, comme cela est décrit dans le brevet français n° 1.370.868 déjà cité.

Cependant, l'application de la gaine sur la plaque d'obturation peut n'être pas parfaite et laisser passer une certaine quantité de liquide.

L'invention a pour objet un nouveau dispositif permettant d'assurer une obturation excellente de l'extrémité de la conduite.

Conformément à l'invention, la plaque d'obturation peut, en position de fermeture, pénétrer à l'intérieur de la gaine et le joint d'étanchéité est un joint gonflable monté entre la plaque d'obturation et la paroi interne de la gaine et susceptible d'être gonflé immédiatement lorsque la gaine est prise en charge par la conduite à la remontée de celle-ci.

L'invention décrit en outre un système de gonflage du joint simple et économique, qui est mis en œuvre automatiquement dès que la gaine prend appui sur la conduite.

Dans un mode de réalisation préférentiel, le moyen de gonflage du joint se compose d'un vérin d'alimentation en fluide monté sur la plaque d'obturation et relié à l'intérieur du joint par une canalisation.

L'invention va maintenant être décrite, en se référant à des modes de réalisation particuliers donnés à titre d'exemple et représentés sur les dessins annexés.

La figure 1 représente schématiquement, en coupe axiale, une conduite de remplissage munie d'un dispositif d'obturation selon l'invention et représentée avant sa pénétration dans la citerne, le dispositif d'obturation étant fermé.

La figure 2 est une vue de détail de l'extrémité de la conduite après pénétration dans la citerne, le dispositif d'obturation étant ouvert.

Sur les figures, on a représenté une installation de remplissage de citerne comprenant une conduite télescopique montée coulissante verticalement à l'intérieur d'une colonne fixe 1 dont la base peut être reliée par une tubulure 11 à une installation, non représentée, d'alimentation de la citerne en fluide tel qu'un hydrocarbure. La conduite est elle-même constituée de deux tubes 21, 22, coulissant télescopiquement l'un dans l'autre.

A la partie supérieure de la colonne 1 est monté un vérin 15 de commande du déplacement vertical de la conduite, celle-ci étant suspendue à la tige 16 du vérin.

L'extrémité inférieure du tube interne 22 de la conduite est fermée par une plaque d'obturation 4 dont la partie supérieure a la forme d'un cône à la pointe tournée vers le haut de façon à diffuser latéralement le fluide introduit dans la conduite, celui-ci s'écoulant par des ouvertures latérales 23 ménagées à la base du tube 22, celui-ci étant fixé ou bien s'appuyant simplement sur la plaque d'obturation 4. D'autre part, le tube 21 est muni à sa base de butées 210 qui s'appuient sur des butées correspondantes 220 ménagées à la base du tube 22 de telle sorte que les deux tubes, lorsqu'ils sont rentrés l'un dans l'autre, sont soutenus par la tige 16 du vérin par l'intermédiaire de la plaque d'obturation 4.

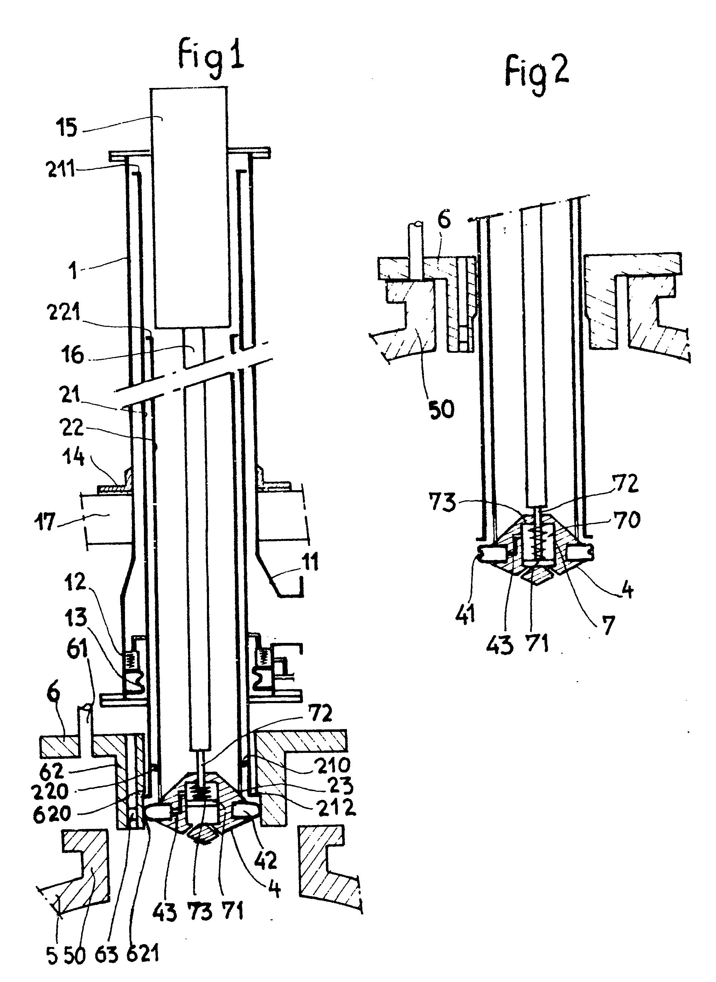

Lorsque le vérin 15 est actionné, les deux tubes descendent simultanément jusqu'à ce que des butées 211 ménagées à la partie supérieure du tube 21 viennent prendre appui sur une bride 12 placée à la partie inférieure de la colonne 1 et sous laquelle est disposé de préférence un joint annulaire 13 du genre presse-étoupe ou joint gonflable, susceptible d'assurer l'étanchéité, de telle sorte que le fluide entrant par la tubulure 11 pénètre directement dans le tube 21. Comme on l'a représenté sur la figure 1, le joint gonflable pourra être actionné par l'appui de la butée 211 sur un vérin annulaire placé au-dessus de la bride 12.

La descente du tube 21 étant ainsi arrêtée par les butées 211, le tube 22 continue à descendre jusqu'à ce que des butées 221 placées à sa partie supérieure viennent prendre appui sur les butées 210 placées dans le bas du tube 21. Le vérin 15 constitue d'ailleurs surtout un moyen de contrôle de la vitesse de descente des tubes, ceux-ci étant entraînés principalement par leur poids. La colonne 1 étant montée, par l'intermédiaire d'une bride 14, sur une charpente fixe 17, surplombant la citerne, il est ainsi possible de commander la descente de la conduite à l'intérieur de la citerne 5 munie d'un orifice 50.

Comme on l'a représenté sur la figure 1, pour éviter que les vapeurs émises lors du remplissage ne se diffusent autour de la citerne, la conduite est solidaire d'une plaque de fermeture 6 susceptible de s'appliquer sur le bord de l'orifice 50 de façon à obturer celui-ci et sur laquelle vient se brancher généralement une conduite 61 d'évacuation des gaz. Pour permettre l'introduction de la conduite à l'intérieur de la citerne, la plaque de fermeture 6 est fixée sur une gaine 62 montée coulissante le long de la conduite, le tube externe 21 de la conduite étant muni de butées 212 sur lesquelles peut s'appuyer la gaine 62 par l'intermédiaire de butées correspondantes 620 de telle sorte que, lorsque la conduite est remontée, la plaque de fermeture 6 et la gaine 62 se trouvent en position basse appuyées sur l'extrémité inférieure de la conduite, la gaine 62 venant se placer devant les ouvertures latérales 23 du tube interne 22. En revanche, lorsque la conduite est descendue, la plaque de fermeture 6 prend appui sur le bord de l'orifice 50 et reste ainsi en position haute tandis que les tubes 21 et 22 continuent à descendre, les ouvertures latérales 23 étant alors découvertes.

La gaine 62 pourra être munie d'une sonde 63 permettant de déclencher un signal d'alarme en cas de remplissage excessif de la citerne.

Cette sonde serait avantageusement constituée d'un émetteur-récepteur à ultra-sons; en cas de montée du liquide jusqu'au niveau inférieur de la gaine, l'amortissement total du faisceau réfléchi déterminerait le basculement d'un relais commandant la fermeture de la vanne de chargement.

L'une des caractéristiques de l'invention réside dans le fait que la gaine 62 s'appuie sur les butées 212 du tube externe 21 et non pas sur la plaque d'obturation 4, celle-ci ayant au contraire un diamètre sensiblement inférieur au diamètre interne de la gaine 62 de façon à pénétrer à l'intérieur de la gaine. De la sorte, il est possible de placer un joint annulaire gonflable 41 dans une gorge 42 ménagée sur le pourtour de la plaque d'oburation 4.

Comme on l'a représenté sur la figure 2, le joint gonflable 41 lorsqu'il est dégonflé, est rentré à l'intérieur de la gorge 42 et de ce fait ne gêne pas l'introduction de la plaque d'obturation 4 dans la gaine 62 à la remontée de la conduite. Cependant, selon l'invention, dès que l'on détecte l'augmentation de poids supporté par le vérin 3 lorsque, à la sortie de l'orifice 50, la gaine 62 est prise en charge par le tube 21, on commande simultanément le gonflement du joint 42 qui vient ainsi s'appliquer contre la paroi interne 621 de la gaine 62 et réalise une étanchéité parfaite à la base de la conduite. En effet, en venant s'appuyer sur une paroi cylindrique coaxiale, le joint gonflable, soumis à un effort d'application radiale travaille dans les meilleures conditions.

Les gouttes de liquide qui s'écoulaient le long des parois internes et externes des tubes 21 et 22 sont arrêtées par le joint 41 et la gaine 62, la hauteur de celle-ci étant normalement suffisante pour contenir la quantité résiduelle de produits.

Le fonctionnement du dispositif repose ainsi sur le gonflement immédiat du joint gonflable lorsque la gaine 62 est prise en charge par la conduite à la remontée de celle-ci. L'invention a également pour objet un dispositif très simple et peu onéreux permettant d'assurer le gonflement du joint en toute sécurité.

En effet, la chambre interne du joint gonflable 41 est reliée par une canalisation 43 à la chambre 70 d'un vérin 7 de commande de l'alimentation en fluide du joint. Le vérin 7 est normalement à simple effet, sa chambre active 70 étant placée au-dessus du piston 71 et traversée par la tige 72. Celle-ci est fixée à l'extrémité de la tige 16 du vérin 15 de manœuvre et le piston 71 s'appuie sur le fond de la chambre 70 par un ressort de compression 73 qui est taré de façon à compenser le poids des tubes 21 et 22. Il en résulte que le vérin 7 se comporte comme un peson, le piston 71 étant à fond de course lorsque la plaque d'obturation 4 ne supporte que les deux tubes 21 et 22 de la conduite.

En revanche, lorsque la conduite sort de l'orifice 50 et prend en charge la gaine 62 et le plateau de fermeture 6, le ressort 73 qui supporte un poids supérieur à celui pour lequel il a été taré se comprime et le piston 71, soulevé par la tige 16, se déplace à l'intérieur de la chambre 70. Une certaine quantité de fluide est envoyée par la canalisation 43 dans le joint 41 qui se gonfle et vient s'appliquer contre la paroi interne 621 de la gaine 62. Lorsque la pression dans le joint 41 et dans la chambre 70 est telle qu'elle équilibre le poids supplémentaire de la gaine 62, le piston 71 cesse de se déplacer à l'intérieur de la chambre et la plaque d'obturation 4 qui était restée au même niveau pendant tout le gonflement du joint est de nouveau soulevée par le vérin 15 en entraînant les tubes télescopiques et la gaine 62.

On voit que le fonctionnement est parfaitement sûr puisque la gaine 62 et la plaque de fermeture 6 ne sont pas soulevées tant que le joint gonflable n'est pas parfaitement appliqué. La pression d'application, qui s'exerce radialement c'est-à-dire dans les meilleures conditions, n'est d'autre part pas limitée au poids supplémentaire de la gaine 62 puisqu'on peut obtenir un effet de démultiplication en jouant sur les sections relatives de la chambre interne du joint et de la chambre active du vérin 7.

Bien entendu, l'invention ne se limite pas aux détails du mode de réalisation qui vient d'être décrit, celui-ci pouvant faire l'objet de variantes, et le principe de l'invention pouvant être appliqué appliqué par des moyens équivalents.

C'est ainsi que le dispositif selon l'invention s'applique particulièrement bien au type de conduites à tubes télescopiques qui a été représenté car cette disposition permet de réduire la hauteur de la conduite et par conséquent la longueur de la tige de suspension 16. Cependant, le dispositif pourrait évidemment s'appliquer à d'autres types de conduites et d'ailleurs la tige de suspension ne doit pas obligatoirement être fixée sur la plaque inférieure d'obturation de la conduite, d'autres systèmes de gonflement du joint sous l'action d'un poids supplémentaire pouvant être imaginés.

**Revendications**

1. Dispositif d'obturation de l'extrémité inférieure d'une conduite de remplissage d'une citerne en produit liquide comprenant au moins un élément tubulaire mobile verticalement le long de son axe de façon à pénétrer à l'intérieur de la citerne, fermé à son extrémité inférieure par une plaque d'obturation, et muni d'ouvertures latérales de passage du liquide devant lesquelles peut venir se placer une gaine cylindrique montée coulissante sur la conduite et reliée à la plaque d'obturation, en position de fermeture, par un joint d'étanchéité, ladite gaine étant arrêtée par des butées d'appui sur la citerne lorsque la conduite pénètre à l'intérieur de celle-ci et étant reprise en charge par la conduite, à la remontée de celle-ci, de façon à fermer les ouvertures latérales, caractérisé par le fait qu'en position de fermeture, la plaque d'obturation (4) peut pénétrer à l'intérieur de la gaine (62) et que le joint d'étanchéité est un joint gonflable (41) monté entre la plaque d'obturation (4) et la paroi interne de la gaine (62) et susceptible d'être gonflé immédiatement lorsque la gaine (62) est prise en charge par la conduite (21, 22) à la remontée de celle-ci.

2. Dispositif d'obturation selon la revendication 1, caractérisé par le fait que, la conduite (21, 22) étant supportée par un organe de suspension (16), le gonflage de joint (4), est commandé par un moyen (71, 72, 73) de détection de l'augmentation du poids supporté par l'organe de suspension (16).

3. Dispositif d'obturation selon la revendication 1, caractérisé par le fait qu'il comprend un vérin hydraulique (7) de gonflage du joint (41), monté sur la plaque d'obturation (4) et relié à l'intérieur du joint (41) par une canalisation (43) d'alimentation en fluide.

4. Dispositif d'obturation selon la revendication 2, caractérisé par le fait que le moyen de détection de l'augmentation de poids est un peson se composant d'une tige de liaison (72) entre l'organe de suspension (16) et la plaque d'obturation (4) dont l'extrémité supérieure est fixée sur l'organe de suspension (16) et dont l'extrémité inférieure soutient la plaque d'obturation (4) par l'intermédiaire d'un organe élastique taré (73) d'équilibrage du poids de la plaque d'obturation (4) et de la conduite (21, 22).

5. Dispositif d'obturation selon les revendications 2, 3, 4 caractérisé par le fait que la tige du peson constitue la tige (72) du vérin (7) de gonflage du joint et que l'organe élastique (73) est placé entre le piston (71) et le fond de la chambre du vérin (7) dans le sens de maintien du piston (71) à fond de course sous le poids de la conduite (21, 22) seule lorsque la gaine coulissante (62) s'appuie sur la citerne (5).

**Claims**

1. Sealing device for the lower end of a filling pipe of a liquid product cistern, comprising at least one tubular element, vertically movable along its axis, so as to penetrate into the interior of the cistern, closed at its lower end by a sealing plate, and equipped with lateral openings for the passage of the liquid, in front of which a cylindrical envelope can place itself, which is mounted in a sliding position on the pipe and connected to the sealing plate, in the closed position, by a tight joint, the said envelope being arrested by support lugs on the cistern, when the pipe penetrates into the interior of the latter, and being taken in charge by the pipe again on the rising part of the latter, so as to close the side openings, characterised in that, in the closed position, the sealing plate (4) can penetrate into the interior of the envelope (62) and that the tight joint is an inflatable joint (41), mounted between the sealing plate (4) and the internal wall of the envelope (62) and capable of being immediately inflated when the envelope (62) is taken in charge by the pipe (21, 22) on the rising part of the latter.

2. Sealing device according to Claim 1, characterised in that, while the pipe (21, 22) is supported by a suspension element (16), the inflation of the joint (4) sic! is controlled by by a means (71, 72, 73) for the detection of the increase in weight, supported by the suspension element (16).

3. Sealing device according to Claim 1, characterised in that it comprises a hydraulic jack (7) for the inflation of the joint (41), mounted on the sealing plate (4) and connected to the interior of the joint (41) by a fluid supply duct (43).

4. Sealing device according to Claim 2, characterised in that the means for the detection of the increase in weight is a balance, consisting of a connecting rod (72) between the suspension element (16) and the sealing plate (4), the upper end of which is fixed to the suspension element (16) and the lower end of which supports the sealing plate (4) by means of a tared elastic element (73) for the balancing of the weight of the sealing plate (4) and of the pipe (21, 22).

5. Sealing device according to Claims 2, 3 and 4, characterised in that the rider rod of the balance constitutes the rod (72) of the jack (7) for the inflation of the joint and that the elastic element (73) is placed between the piston (71) and the bottom of the chamber of the jack (7), so as to maintain the piston (71) at dead centre under the weight of the pipe (21, 22) only, when the sliding envelope (62) rests on the cistern (5).

**Patentansprüche**

1. Abdichtungsvorrichtung am unteren Ende einer Fülleitung zu einem Flüssigkeitstank bestehend aus mindestens einem senkrecht in Richtung seiner Achse zum Eindringen in das Innere des Tanks beweglichen rohrförmigen Teil, das an seinem unteren Ende durch eine Abdichtungsplatte abgeschlossen wird und mit seitlichen Flüssigkeitsdurchlass-Öffnungen versehen ist, vor die sich eine zylindrische, auf der Röhre gleitend angebrachte Hülle legen kann, die in Schliessstellung durch eine Dichtung mit der Abdichtungsplatte verbunden ist, wobei diese Hülle durch Abstützansätze auf dem Tank festgehalten wird, wenn die Rohrleitung in diesen eindringt und wieder bei Aufwärtssteigen der Rohrleitung von dieser getragen wird, so dass die seitlichen Öffnungen geschlossen werden, dadurch gekennzeichnet, dass die Abdichtungsplatte (4) in Schliessstellung in die Hülle (62) eindringen kann und dass der Dichtring ein zwischen Abdichtungsplatte (4) und der Innenwand der Hülle (62) montierter, aufblasbarer Ring (41) ist, der sofort aufgeblasen werden kann, wenn die Hülle (62) beim Aufsteigen der Rohrleitung 21, 22 von dieser aufgenommen wird.

2. Abdichtungsvorrichtung nach Anspruch 1 dadurch gekennzeichnet, dass, während die Rohrleitung (21, 22) von einem Aufhängungsorgan (16) getragen wird, das Aufblasen des Dichtrings (41) durch ein Mittel (71, 72, 73) zur Erfassung der Erhöhung des vom Aufhängungsorgan (16) getragenen Gewichts gesteuert wird.

3. Abdichtungsvorrichtung nach Anspruch 1 dadurch gekennzeichnet, dass sie mit einem Hydraulikzylinder (7) zum Aufblasen der Dichtung (41) ausgestattet ist, der an der Abdichtungsplatte (4) angebracht ist und mit dem Dichtring (41) innen durch eine Flüssigkeitszuleitung (43) verbunden ist.

4. Abdichtungsvorrichtung nach Anspruch 2 dadurch gekennzeichnet, dass das Mittel zur Bestimmung der Gewichtserhöhung eine Feder-Waage ist die sich aus einer Verbindungsstange (72) zwischen dem Aufhängungsorgan (16) und der Abdichtungsplatte (4) zusammensetzt, wobei das obere Teil der Stange am Aufhängungsorgan (16) befestigt ist und das untere Teil die Abdichtungsplatte (4) über ein federndes tariertes Element (73) zum Gewichtsausgleich zwischen Abdichtungsplatte (4) und der Rohrleitung (21, 22) trägt.

5. Abdichtungsvorrichtung nach Anspruch 2, 3 und 4 dadurch gekennzeichnet, dass die Stange der Feder-Waage die Stange (72) des Zylinders (7) zum Aufblasen des Dichtrings darstellt und dass das federnde Organ (73) zwischen dem Kolben (71) und dem Kammerboden des Zylinders (7) so angeordnet ist, dass der Kolben (71) nur unter dem Gewicht der Rohrleitung (21, 21) in Hubendstellung gehalten wird, wenn die Schiebehülle (62) sich auf den Tank (5) stützt.

Fig 1

Fig 2